# EUROPEAN PATENT SPECIFICATION

(11) **EP 1 801 147 B1**
(45) Date of publication and mention of the grant of the patent: **01.04.2009**
(21) Application number: 06022658.6
(22) Date of filing: 30.10.2006
(51) Int. Cl.: C08K 3/22, C08L 21/00, B60C 1/00, B60C 13/00

(54) **Rubber composition for sidewall**
Kautschukzusammensetzung für Reifenseitenwand
Composition de caoutchouc pour flancs de pneu

(30) Priority: 21.12.2005 JP 2005368288
(43) Date of publication of application: 27.06.2007
(73) Proprietor: SUMITOMO RUBBER INDUSTRIES, LTD., Hyogo-ken (JP)
(72) Inventor: Uesaka, Kenichi, Chuo-ku Kobe-shi Hyogo-ken (JP); Wada, Takao, Chuo-ku Kobe-shi Hyogo-ken (JP); Uchida, Mamoru, Chuo-ku Kobe-shi Hyogo-ken (JP)
(74) Representative: Manitz, Finsterwald & Partner GbR

(56) References cited:
- EP-A- 1 505 115
- WO-A-93/09178
- DATABASE WPI Week 200328 Derwent Publications Ltd., London, GB; AN 2003-279746 XP002423764 & CN 1 386 788 A (UNIV SHANGHAI ENG & TECHNOLOGY) 25 December 2002 (2002-12-25)

## Description

The present invention relates to a tire having a sidewall comprising a rubber composition for a sidewall.

Conventionally, as for a rubber composition used for a sidewall of a tire, in addition to a natural rubber (NR) showing excellent tear strength, a butadiene rubber (BR) has been blended in order to improve flex crack resistance performance, and carbon black has been further used in order to improve weather resistance and reinforcing property.

However, environmental problems has been recently emphasized, and regulations for suppression of CO₂ emission is tightened, and further, from the viewpoints that petroleum resources are limited and its amount supplied is decreased every year, increase of petroleum oil prices is predicted in the future, and there is limitation on uses of materials derived from petroleum oil resources such as BR and carbon black. Therefore, as imagined in the case where petroleum oil is depleted in the future, it is necessary to use resources other than petroleum such as white fillers, for example, NR, silica and calcium carbonate. In the case of using such resources other than petroleum, it is also necessary to have the same or more performance of properties such as flex crack resistance and reinforcing property obtained through using the petroleum resources which have been conventionally used, however, there is a problem that properties such as flex crack resistance performance and reinforcing property are significantly deteriorated when resources other than petroleum are used, compared with the case of using the petroleum resources.

JP-A-2003-113270 discloses a rubber composition for a sidewall lowering rolling resistance without lowering decoloration resistance performance and ozone resistance by containing specific carbon black and calcium carbonate in a specific rubber component, and a pneumatic tire using the same, but the rubber composition contains large amounts of a synthetic rubber and carbon black, thus, besides it is not ecological to environments, tear strength and flex crack resistance performance are not improved.

WO 93/09178 discloses a tire comprising a rubber composition containing 100 parts by weight of a rubber component, 20 to 65 phr of carbon black, 0.5 to 4.0 phr of an activator, 1.0 to 10.0 phr of zinc oxide, 1.0 to 10.0 phr of sulfur or a sulfur donor and 0.5 to 5.0 phr of a curing accelerator.

EP 1 505 115 A1 relates to a rubber composition containing 100 parts by weight of at least one rubber containing olefinic unsaturation, 1 to 250 phr of a filler and 0.05 to 5.0 phr of zinc oxide particles having a diameter of less than 20 nanometers.

CN 1,386,788 discloses a rubber containing a rubber matrix, a vulcanizing agent and zinc oxide as vulcanizing activator.

An object of the present invention is to provide a rubber composition for a sidewall, which is ecological by increasing an amount ratio of resources other than petroleum, provided for future decrease of oil amount supplied, and further, maintains hardness and is excellent in crack resistance and flex crack resistance.

The present invention relates to a tire having a sidewall comprising a rubber composition for a sidewall, comprising 0.1 to 10 parts by weight of zinc oxide having an average particle size of at most 200 nm based on 100 parts by weight of a rubber component comprising at least 30 % by weight of a natural rubber and at most 70 % by weight of an epoxidized natural rubber.

It is preferable that the rubber composition for a sidewall of the sidewall of the tire further comprises 15 to 60 parts by weight of silica.

The rubber composition of the sidewall of the tire according the present invention contains a rubber component and zinc oxide.

The rubber component comprises a natural rubber (NR) and an epoxidized natural rubber (ENR).

As the rubber component, other than NR and ENR, examples are a butadiene rubber (BR), a styrene-butadiene rubber (SBR), an isoprene rubber (IR), a butyl rubber (IIR), an acrylonitrile-butadiene rubber (NBR), an ethylene-propylene-diene rubber (EPDM), a halogenated butyl rubber (X-IIR), and a halogenated product of a copolymer of an isomonoolefin and para-alkylstyrene, but NR and/or ENR are preferable from the viewpoints that these are ecological and can be provided for future decrease of oil amount supplied.

As NR, NR in such grade as RSS#3 and TSR20, which are conventionally used in rubber industries, can be used.

As ENR, commercially available ENR can be used, or it is possible to epoxidize NR to be used. An process for epoxidizing ENR is not specifically limited and can be carried out using processes such as a chlorohydrin process, a direct oxidation process, a hydrogen peroxide process, an alkylhydroperoxide process, and a peracid process. As the peracid process, an example is a process of reacting peracids such as peracetic acid and performic acid with NR.

An epoxidization ratio of ENR is preferably at least 12 % by mol, and more preferably at least 15 % by mol. When the epoxidization ratio is less than 12 % by mol, since ENR and NR are dissolved, effects tend to be lowered. Further, the epoxidization ratio is preferably at most 70 % by mol, and more preferably at most 50 % by mol. When the epoxidization ratio exceeds 70 % by mol, rubber hardness of the obtained rubber composition tends to be insufficient.

An amount of NR in the rubber component is at least 30 % by weight, and preferably at least 40 % by weight, and an amount of ENR is at most 70 % by weight, and preferably at most 60 % by weight. When the amount of NR is less than 30 % by weight, and the amount of ENR is more than 70 % by weight, rubber hardness of the obtained rubber composition is not sufficient. Further, the amount of NR is preferably at most 90 % by weight, and more preferably at most 80 % by weight. On the other hand, the amount of ENR is preferably at least 10 % by weight, and more preferably at least 20 % by weight. When the amount of NR is more than 90 % by weight, and the amount of ENR is less than 10 % by weight, flex crack resistance performance tends to be deteriorated.

An average particle size of zinc oxide is preferably at least 1 nm, and more preferably at least 10 nm. When the average particle size of zinc oxide is less than 1 nm, dispersibility of zinc oxide tends to be inferior. Further, the average particle size of zinc oxide is at most 200 nm, and preferably at most 150 nm. When the average particle size of zinc oxide is more than 200 nm, such zinc oxide has a large possibility to become a base point causing cracks, and is inferior in flex crack resistance performance.

An amount of zinc oxide is at least 0.1 part by weight, and preferably at least 0.5 part by weight based on 100 parts by weight of the rubber component. When the amount of zinc oxide is less than 0.1 part by weight, effects as a vulcanization aid due to compounding zinc oxide can not be obtained. Further, the amount of zinc oxide is at most 10 parts by weight, and preferably at most 8 parts by weight. When the amount of zinc oxide is more than 10 parts by weight, flex crack resistance performance is deteriorated.

In the present invention, it is possible that the rubber composition is ecological and can be provided for future decrease of petroleum oil amount supplied by containing a specific amount of zinc oxide having a small particle size in a rubber component comprising specific amounts of NR and ENR.

It is preferable to further contain silica in the rubber composition for a sidewall of the present invention.

Silica is not particularly limited, and those prepared with a wet process or a dry process can be used.

A BET specific surface area (BET) of silica is preferably at least 40 m²/g, and more preferably at least 80 m²/g. When BET of silica is less than 40 m²/g, abrasion resistance tends to be lowered. Further, BET of silica is preferably at most 400 m²/g, and more preferably at most 300 m²/g. When BET of silica is more than 400 m²/g, dispersibility of zinc oxide tends to be inferior.

An amount of silica is preferably at least 15 parts by weight, and more preferably at least 20 parts by weight based on 100 parts by weight of the rubber component. When the amount of silica is less than 15 parts by weight, tear strength is low, and breakage tends to be caused when a tire is in contact with projections during running. Further, the amount of silica is preferably at most 60 parts by weight, and more preferably at most 50 parts by weight. When the amount of silica is more than 60 parts by weight, flex crack resistance performance tends to be inferior.

When silica is compounded, a silane coupling agent can be used together with silica.

The silane coupling agent is not particularly limited, and those conventionally used together with silica in rubber industries can be used, and examples are bis(3-triethoxysilylpropyl) polysulfide, bis(2-triethoxysilylethyl) polysulfide, bis(3-trimethoxysilylpropyl) polysulfide, bis(2-trimethoxysilylethyl) polysulfide, bis(4-triethoxysilylbutyl) polysulfide, and bis(4-trimethoxysilylbutyl) polysulfide, and these silane coupling agents can be used alone, or at least two kinds thereof can be combined to be used.

When silica and a silane coupling agent are compounded, an amount of the silane coupling agent is preferably at least 4 parts by weight, and more preferably at least 5 parts by weight based on 100 parts by weight of silica. When the amount of the silane coupling agent is less than 4 parts by weight, flex crack resistance performance tends to be inferior. Further, the amount of the silane coupling agent is preferably at most 20 parts by weight, and more preferably at most 15 parts by weight. When the amount of the silane coupling agent is more than 20 parts by weight, flex crack resistance performance tends to be inferior.

The rubber composition for a sidewall of the present invention is designed to be ecological and provided for future decrease of petroleum amount supplied by utilizing resources other than petroleum, and it is preferable that components such as carbon black, aroma oil, and petroleum resin are not used.

Other than the above-described rubber components, zinc oxide, silica and silane coupling agent, the rubber composition for a sidewall of the present invention can be suitably compounded with additives conventionally used in rubber industries, for example, a softener such as wax, various antioxidants, stearic acid, vulcanizing agents such as sulfur, and various vulcanization accelerators, if necessary.

The rubber composition for a sidewall of the tire according the present invention obtained in this manner can contain resources other than petroleum in an amount of 97.4 to 97.6 % by weight based on the total amount of the rubber composition, thus, the rubber composition is ecological and can be provided for future decrease of petroleum amount supplied.

The tire of the present invention can be prepared by usual processes using the aforementioned rubber composition for a sidewall. Namely, the rubber composition for a sidewall compounded with the above-described additives according to necessity is extrusion-processed adjusting with a shape of a sidewall, and molded together with other tire parts on a tire molding machine in a usual process to mold an unvulcanized tire. The tire of the present invention can be obtained by heating and pressurizing this unvulcanized tire in a vulcanizing machine. In this manner, by preparing the tire of the present invention using the rubber composition for a sidewall, the tire of the present invention can be an ecological tire which is earth-friendly and provided for future decrease of petroleum amount supplied.

### EXAMPLES

The present invention is explained in detail based on Examples, but the present invention is not limited only thereto.

Then, chemicals used in Examples and Comparative Examples are collectively described.
Natural rubber (NR): TSR20
Butadiene rubber (BR): BR150B available from Ube Industries, Ltd.
Epoxidized natural rubber 1 (ENR1): ENR25 (epoxidization ratio: 25 % by mol) available from Kumpulan Guthrie Berhad
Epoxidized natural rubber 2 (ENR2): ENR50 (epoxidization ratio: 50 % by mol) available from Kumpulan Guthrie Berhad
Carbon black: DIABLACK E (N₂SA: 41 m²/g) available from Mitsubishi Chemical Corporation
Silica: Ultrasil VN3 (BET: 170 m²/g) available from Degussa Co.
Silane coupling agent: Si75 (bis(triethoxysilylpropyl) disulfide (TESPD)) available from Degussa Co.
Aroma oil: PROCESS X-140 available from Japan Energy Corporation
Petroleum resin: SP1068 resin available from Nippon Shokubai Co., Ltd.
Wax: OZOACE 0355 available from NIPPON SEIRO CO., LTD.
Antioxidant: ANTIGEN 6C (N-(1,3-dimethylbutyl)-N'-phenyl-p-phenylenediamine) available from Sumitomo Chemical Co., Ltd.
Stearic acid: Stearic acid "Tsubaki" available from NOF Corporation
Zinc oxide: Zinc oxide (average particle size: 500 nm) available from Mitsui Mining & Smelting Co., Ltd.
Nano-particle zinc oxide: ZINCOX SUPER F-2 (average particle size: 65 nm) available from Hakusui Tech Co., Ltd.
Sulfur: Sulfur powder available from Tsurumi Chemical Industry Co., Ltd.
Vulcanization accelerator: NOCCELER NS (N-tert-butyl-2-benzothiazolylsulfeneamide) available from OUCHI SHINKO CHEMICAL INDUSTRIAL CO., LTD.

### EXAMPLES 1 to 5 and COMPARATIVE EXAMPLES 1 to 5

According to the compounding prescriptions shown in Table 1, using a 1.7L-banbury mixer manufactured by Kobe Steel., Ltd. chemicals other than sulfur and a vulcanization accelerator were filled to have a filling ratio of 58 %, and kneaded for 3 minutes at 80 rpm until a temperature reached 150°C to obtain a kneaded product. Then, using an open roll, the sulfur and vulcanization accelerator were added to the obtained kneaded product, and kneaded for 3 minutes under the condition at 80°C to obtain an unvulcanized rubber composition. Further, vulcanized rubber compositions in Examples 1 to 5 and Comparative Examples 1 to 5 were prepared by vulcanizing the obtained unvulcanized rubber composition for 20 minutes under the condition at 160°C.

### (Hardness)

According to JIS K 6253 "Hardness Test Method of Vulcanized Rubbers and Thermoplastic Rubbers", hardness was measured with a spring type A.

### (Tear strength)

According to "Method of Finding Tear Strength of Vulcanized Rubbers and Thermoplastic Rubbers", tears strength (N/mm) was measured, using an angle-shaped test piece without notch. It indicates that the larger the tear strength is, the more excellent crack resistance is.

### (Flex crack growth resistance test)

According to JIS K 6260 "DeMattia Flex crack Growth Test Method of Vulcanized Rubbers and Thermoplastic Rubbers", the number of times when 1mm-crack is generated in the vulcanized rubber composition sample was measured under a room temperature at 25°C, and the number of times obtained was expressed as an index. It indicates that the larger the value is, the more excellent flex crack resistance performance is, and 70 % and 110 % indicate elongation ratios for a length of the original vulcanized rubber composition sample.

Evaluation results of the above-described tests are shown in Table 1.

**TABLE 1**

| | Ex. | | | | | Com. Ex. | | | | |
|---|---|---|---|---|---|---|---|---|---|---|
| | 1 | 2 | 3 | 4 | 5 | 1 | 2 | 3 | 4 | 5 |
| Amounts (part by weight) | | | | | | | | | | |
| NR | 60 | 60 | 70 | 70 | 100 | 40 | 60 | 70 | 60 | 100 |
| BR | - | - | - | - | - | 60 | - | - | - | - |
| ENR 1 | 40 | 40 | - | - | - | - | 40 | - | 40 | - |
| ENR2 | - | - | 30 | 30 | - | - | - | 30 | - | - |
| Carbon black | - | - | - | - | - | 50 | - | - | - | - |
| Silica | 50 | 50 | 50 | 50 | 50 | - | 50 | 50 | 50 | 50 |
| Silane coupling agent | 4 | 4 | 4 | 4 | 4 | - | 4 | 4 | 4 | 4 |
| Aroma oil | - | - | - | - | - | 5 | - | - | - | - |
| Petroleum resin | - | - | - | - | - | 3 | - | - | - | - |
| Wax | 1.2 | 1.2 | 1.2 | 1.2 | 1.2 | 1.2 | 1.2 | 1.2 | 1.2 | 1.2 |
| Antioxidant | 2.4 | 2.4 | 2.4 | 2.4 | 2.4 | 2.4 | 2.4 | 2.4 | 2.4 | 2.4 |
| Stearic acid | 2.5 | 2.5 | 2.5 | 2.5 | 2.5 | 2.5 | 2.5 | 2.5 | 2.5 | 2.5 |
| Zinc oxide | - | - | - | - | - | 3 | 3 | 3 | - | 3 |
| Nano-particle zinc oxide | 0.1 | 10 | 0.1 | 10 | 10 | - | - | - | 15 | - |
| Sulfur | 1.5 | 1.5 | 1.5 | 1.5 | 1.5 | 1.5 | 1.5 | 1.5 | 1.5 | 1.5 |
| Vulcanization accelerator | 0.7 | 0.7 | 0.7 | 0.7 | 0.7 | 0.7 | 0.7 | 0.7 | 0.7 | 0.7 |
| Ratios other than petroleum | 97.4 | 97.5 | 97.4 | 97.5 | 97.5 | 97.5 | 67.9 | 97.4 | 97.6 | 97.4 |
| Evaluation results | | | | | | | | | | |
| Hardness | 53 | 53 | 54 | 54 | 54 | 52 | 53 | 54 | 55 | 55 |
| Tear strength | 54 | 53 | 55 | 53 | 52 | 52 | 53 | 54 | 51 | 51 |
| Flex crack growth resistance test (70%) | 6.9 | 6.5 | 7 | 6.7 | 6.2 | 7 | 5.8 | 5.9 | 5.5 | 5 |
| Flex crack growth resistance test (110 %) | 5.9 | 5.7 | 6.1 | 5.9 | 5.4 | 6.5 | 4.9 | 5 | 4.6 | 4.1 |

According to the present invention, an amount of resources other than petroleum is increased by providing a tire having a sidewall comprising a rubber component comprising specific amounts of a natural rubber and an epoxidized natural rubber and a specific amount of zinc oxide having a small average particle size, thereby a rubber composition for a sidewall, which is ecological, provided for future decrease of oil amount supplied, and further, maintains hardness and is excellent in crack resistance and flex crack resistance, can be provided.

## Claims

1. A tire having a sidewall which comprises a rubber composition for a sidewall, comprising 0.1 to 10 parts by weight of zinc oxide having an average particle size of at most 200 nm based on 100 parts by weight of a rubber component comprising at least 30 % by weight of a natural rubber and at most 70 % by weight of an epoxidized natural rubber.

2. The tire having a sidewall which comprises the rubber composition for a sidewall of Claim 1, wherein the rubber composition for the sidewall further comprises 15 to 60 parts by weight of silica.

## Patentansprüche

1. Reifen mit einer Seitenwand, welche eine Kautschukzusammensetzung für eine Seitenwand enthält, welche 0,1 bis 10 Gewichtsteile Zinkoxid mit einer durchschnittlichen Partikelgröße von maximal 200 nm bezogen auf 100 Gewichtsteile einer Kautschukkomponente enthaltend wenigstens 30 Gewichtsteile eines Naturkautschuks und maximal 70 Gewichtsteile eines epoxidierten Naturkautschuks enthält.

2. Reifen mit einer Seitenwand, welche die Kautschukzusammensetzung für eine Seitenwand nach Anspruch 1 enthält, wobei die Kautschukzusammensetzung für die Seitenwand des Weiteren 15 bis 60 Gewichtsteile Silica enthält.

## Revendications

1. Pneumatique ayant un flanc qui comprend une composition de caoutchouc pour flanc, comprenant 0,1 à 10 parties en masse d'oxyde de zinc ayant une taille de particule moyenne d'au plus 200 nm sur la base de 100 parties en masse d'un composant caoutchouc comprenant au moins 30 % en masse d'un caoutchouc naturel et au plus 70 % en masse d'un caoutchouc naturel époxydé.

2. Pneumatique ayant un flanc qui comprend la composition de caoutchouc pour flanc selon la revendication 1 où la composition de caoutchouc pour flanc comprend en outre 15 à 60 parties en masse de silice.
